# EUROPÄISCHE PATENTSCHRIFT

(11) **EP 4 445 106 B1**
(45) Veröffentlichungstag und Bekanntmachung des Hinweises auf die Patenterteilung: **03.12.2025**
(21) Anmeldenummer: 22801449.4
(22) Anmeldetag: 12.10.2022
(51) Int. Cl.: G01G 7/04, G01G 23/01

(54) **WÄGEVORRICHTUNG UND VERFAHREN ZU DEREN BETRIEB**
WEIGHING DEVICE AND METHOD FOR OPERATING SAME
DISPOSITIF DE PESAGE ET SON PROCÉDÉ DE FONCTIONNEMENT

(30) Priorität: 06.12.2021 DE 102021132094
(43) Veröffentlichungstag der Anmeldung: 16.10.2024
(73) Patentinhaber: Technische Universität Ilmenau, Körperschaft des Öffentlichen Rechts, 98693 Ilmenau (DE)
(72) Erfinder: DARNIEDER, Maximilian, 98693 Ilmenau (DE); THESKA, René, 98693 Ilmenau (DE); FRÖHLICH, Thomas, 98693 Ilmenau (DE); PABST, Markus, 98552 Schleusingen OT Hinternah (DE); HILBRUNNER, Falko, 98693 Ilmenau (DE)
(74) Vertreter: Schneider, Peter Christian
(86) Internationale Anmeldenummer: PCT/EP2022/078409
(87) Internationale Veröffentlichungsnummer: WO 2023/104373

(56) Entgegenhaltungen:
- EP-A1- 2 690 415
- US-A- 3 734 218
- DARNIEDER M ET AL: "DESIGN OF HIGH-PRECISION WEIGHING CELLS BASED ON STATIC ANALYSIS", ENGINEERING FOR A CHANGING WORLD : PROCEEDINGS; 59TH IWK, ILMENAU SCIENTIFIC COLLOQUIUM, TECHNISCHE UNIVERSITÄT ILMENAU, SEPTEMBER 11-15, 2017, vol. 59, 27 October 2017 (2017-10-27), pages 1 - 10, XP093019761, Retrieved from the Internet <URL:https://www.db-thueringen.de/servlets/MCRFileNodeServlet/dbt_derivate_00039260/ilm1-2017iwk-067.pdf> [retrieved on 20230202]

## Beschreibung

### Gebiet der Erfindung

Die Erfindung bezieht sich auf eine Wägevorrichtung, umfassend
- einen gegenüber einer Basis vertikal auslenkbaren Lastaufnehmer,
- einen um ein basisfestes erstes Hebelgelenk schwenkbar gelagerten ersten Übertragungshebel mit einem am Lastaufnehmer angelenkten, ersten lastaufnehmerseitigen Hebelarm und einem mit einem ersten Sensor gekoppelten, ersten lastaufnehmerfernen Hebelarm,
- den eine erste Tauchspulenanordnung aufweisenden ersten Sensor, wobei die erste Tauchspulenanordnung zwei in vertikaler Richtung relativ zueinander bewegbare erste Sensorelemente, nämlich einen ersten Magneten und eine in das Magnetfeld des ersten Magneten eingetauchte erste Spule, umfasst und an dem ersten lastaufnehmerfernen Hebelarm angreift, indem eines ihrer Sensorelemente starr mit dem ersten lastaufnehmerfernen Hebelarm und das andere starr mit der Basis verbunden ist,
wobei der erste Übertragungshebel mit ersten Astasierungsmitteln versehen ist, die einen Astasierungsbeitrag zur effektiven Systemsteifigkeit in einer ersten Astasierungsrichtung bewirken.

### Stand der Technik

Nach dem Prinzip der elektromagnetischen Kompensation arbeitende, gravimetrische Messvorrichtungen, mithin Wägevorrichtungen, sind dem Fachmann seit Langem bekannt. Beispielsweise offenbart die EP 2 690 415 A1 eine gattungsgemäße Wägevorrichtung.

Das Grundprinzip einer solchen Wägevorrichtung besteht darin, dass die durch das Gewicht einer Last verursachte Auslenkung eines Lastaufnehmers gegenüber einer Basis mittels eines Übertragungshebels kraft- und wegübersetzt zu einem Sensor übertragen wird, der seinerseits eine der Auslenkung entgegengerichtete, elektromagnetische Kraft auf den Hebelarm auszuüben vermag. Diese Kompensationskraft ist abhängig von dem Strom, mit dem die Spule einer die Kompensationskraft erzeugenden Tauchspulenanordnung bestromt wird. Wird der Strom so gewählt, dass die lastbedingte Auslenkung des Übertragungshebels exakt kompensiert wird, sich der Hebelarm mithin trotz aufgelegter Last in seiner Gleichgewichtsposition befindet, stellt der Kompensationsstrom ein exaktes Maß für die erforderliche Kompensationskraft und daher für das Gewicht der aufgelegten Last dar.

Technisch wird ein solches System in der Regel wie folgt realisiert: Mittels einer Parallellenker-Anordnung ist der sogenannte Lastaufnehmer an einer festen Basis angelenkt, wodurch seine Bewegungsfreiheitsgrade bei korrekter Aufstellung der Wägevorrichtung - zumindest bei kleinen Auslenkungen - auf eine rein vertikale Bewegung beschränkt sind. Über ein sogenanntes Koppelband ist der Lastaufnehmer an einem Übertragungshebel, insbesondere an dessen lastaufnehmerseitigem Hebelarm angelenkt. Der Übertragungshebel ist an einem basisfesten Hebelgelenk schwenkbeweglich gelagert. Die Lagerstelle stellt die Grenze zwischen dem lastaufnehmerseitigen Hebelarm und dem sensorseitigen Hebelarm des Übertragungshebels dar. Am Ende des sensorseitigen Hebelarms ist die Spule einer Tauchspulenanordnung fixiert. Sie ist in das Magnetfeld eines basisfesten, meist topfartigen Magneten, in der Regel eines Permanentmagneten, eingetaucht. Auch umgekehrte Anordnungen mit basisfester Spule und hebelfestem (Permanent-) Magneten sind denkbar aber unüblich. Die Lage des Übertragungshebels in einer vorgegebenen Referenz-Belastungssituation (in der Regel unbelastet bei üblichen Waagen, belastet bei Komparatoren) stellt seine Gleichgewichtslage dar. Diese kann mittels eines gesonderten Lagesensors, der meist nach einem optischen Prinzip arbeitet, detektiert werden bzw. kann der Hebel so justiert werden, dass er bei unbelastetem Lastaufnehmer in einer vom Lagesensor als Gleichgewichtslage interpretierten Lage angeordnet ist. Bei Bestromung der Spule wird ein dem Spulenstrom entsprechendes Magnetfeld erzeugt, welches mit dem Magnetfeld des Permanentmagneten wechselwirkt, sodass eine Krafteinwirkung auf den sensorseitigen Hebelarm resultiert. Umgekehrt führt ein Auflegen einer Last auf den Lastaufnehmer zu einer mechanischen Krafteinwirkung auf den lastaufnehmerseitigen Hebelarm. Mittels einer geeigneten Regelung kann eine solche Vorrichtung so betrieben werden, dass jede (infinitesimale) lastbedingte Auslenkung des Übertragungshebels vom Lagesensor detektiert und in eine kompensatorische Änderung des Spulenstroms umgewandelt wird. Auf diese Weise verbleibt der Übertragungshebel (abgesehen von infinitesimalen Auslenkungen) in seiner Gleichgewichtslage, wobei der am Ende eines Einschwingprozesses die Spule durchfließende Strom repräsentativ für die auf den Lastaufnehmer aufgelegte Last ist, deren Gewicht durch entsprechende Messung des Spulenstroms höchst präzise festgestellt werden kann.

Der mechanische Anteil dieses komplexen Systems wird im Fachjargon häufig als Wägesystem bezeichnet. Es handelt sich dabei um höchst präzise gefertigte, häufig monolithische Vorrichtungen, die trotz Einsatzes höchstentwickelter Präzisionstechnologie Abweichungen von einem idealen System zeigen können. Insbesondere stellt die sogenannte Steifigkeit der Gelenke in einem solchen Wägesystem eine derartige Abweichung vom Idealsystem dar. Unter Steifigkeit versteht man die Rückstellkraft, die ein reales Gelenk (im Gegensatz zu einem idealen Gelenk) seiner Auslenkung entgegensetzt. Aufgrund dieser Steifigkeit wird also ein Teil der lastbedingten Auslenkung des Übertragungshebels bereits mechanisch kompensiert. Die zur Gesamtkompensation der Auslenkung zusätzlich erforderliche, elektromagnetische Kompensation fällt also entsprechend geringer aus. Da, wie zuvor erläutert, aber lediglich der elektrische Anteil der Kompensation in die Berechnung des Lastgewichts einfließt, führt die Steifigkeit zu einer systematischen Unterbewertung des Lastgewichts. Dies kann zwar, soweit die Steifigkeit explizit bekannt ist, rechnerisch korrigiert werden; als günstiger wird jedoch eine sog. Astasierung, d. h. eine am mechatronischen System selbst vorgenommene Korrektur betrachtet.

In DARNIEDER M ET AL. "DESIGN OF HIGH-PRECISION WEIGHING CELLS BASED ON STATIC ANALYSIS"; ENGINEERING FOR A CHANGING WORLD : PROCEEDINGS; 59TH IWK, ILMENAU SCIENTIFIC COLLOQUIUM, TECHNISCHE UNIVERSITÄT ILMENAU, SEPTEMBER; 11-15, 2017, Vol. 59, 27 October 2017 (2017-10-27), pages 1-10, Retrieved from the Internet: https://www.db-thueringen.de/servlets/MCRFileNodeS ervletldbt_derivate_00039260/ilml-2017iwk-067.pdf findet sich eine detaillierte Untersuchung zur Steifigkeit und zum Design derartiger Wägevorrichtungen, insbesondere im Kontext von hoch präzisen Komparatoren für 1 kg-Gewichtsstandards.

Dem Fachmann sind verschiedene Astasierungsmittel bekannt. Ziel der Astasierung ist es, im Gesamtsystem eine vorbestimmte effektive Steifigkeit einzustellen, die sich aus den intrinsischen Steifigkeiten einzelner Elemente, insbesondere der Gelenke, einerseits und deren (z. T. unvollständigen, z. T. überkompensierenden) Korrekturmaßnahmen andererseits zusammensetzt. Im Kontext der vorliegenden Beschreibung soll diesbezüglich von der "effektiven Systemsteifigkeit" gesprochen werden. Diese wird häufig als exakt gleich null gewünscht; es gibt jedoch praktische Fälle, in denen eine gezielt (positive oder negative) von null verschieden einstellbare effektive Systemsteifigkeit gewünscht ist. Hierzu bedarf es dann einer variierbaren Astasierung in positiver, stabilisierender Astasierungsrichtung und/oder in negativer, labilisierender Astasierungsrichtung.

Als ein Astasierungsmittel ist es beispielsweise bekannt, den Übertragungshebel so zu gestalten, dass sein Schwerpunkt oberhalb des Hebelgelenks, d. h. oberhalb dessen exakten Drehpunktes liegt. Dies führt zu einer Labilisierung der Gleichgewichtslage des Übertragungshebels: Jede Auslenkung des Hebels führt aufgrund des hochgesetzten Schwerpunktes zu einem die Auslenkung verstärkenden Drehmoment. Dieses wirkt dem umgekehrten Steifigkeits-Drehmoment des Hebelgelenks entgegen. Umgekehrt lässt sich durch ein Versetzen des Hebelschwerpunktes unter seinen Gelenk-Drehpunkt eine Stabilisierung, mithin eine Erhöhung der effektiven Systemsteifigkeit erzielen. Nachteilig bei diesem Ansatz ist, dass sowohl die Gelenk-Steifigkeit als auch die Schwerpunktslage des Übertragungshebels Fertigungsabweichungen unterliegen und daher nur in seltenen Ausnahmefällen einander exakt kompensieren. Hinzu kommt eine verstärkte Kippempfindlichkeit des Systems.

Als ein weiteres Astasierungsmittel ist es bekannt, die Schwerpunktlage des Übertragungshebels durch vertikal verschiebliche Trimmgewichte einstellbar zu machen. Dies führt jedoch ebenfalls zu einer deutlichen Zunahme der Kippempfindlichkeit eines solchen Systems und muss insgesamt als nachteilig angesehen werden.

Aus der oben genannten, gattungsbildenden Druckschrift ist es zudem als ein weiteres Astasierungsmittel bekannt, den Übertragungshebel mit horizontal verschieblichen Trimmgewichten zu versehen, die einen (oder beide) der Hebelarme des Übertragungshebels mit einem die Steifigkeit kompensierenden, einstellbaren Drehmoment beaufschlagen können. Solche Anordnungen sind jedoch mechanisch sehr aufwändig und schwer bedienbar, da der Übertragungshebel in der Regel nicht vom Äußeren einer betriebsfertigen Wägevorrichtung zugänglich ist.

Und schließlich ist es als ein noch weiteres Astasierungsmittel bekannt, den Übertragungshebel derart auszugestalten, dass seine beiden Hebelarme in einem von 180° verschiedenen Winkel zueinanderstehen. Bilden sie dabei einen nach vertikal oben offenen Winkel, wird der Kraftangriffspunkt des Übertragungshebels dadurch gegenüber dem Drehpunkt des Hebelgelenks nach oben versetzt, was das System tendenziell labilisiert. Umgekehrt wird er durch eine umgekehrte, dachförmige Gestaltung des Übertragungshebels nach unten versetzt, was das System tendenziell stabilisiert.

In der Praxis addieren sich oft unterschiedliche, ggf. in unterschiedlichen Astasierungsrichtungen wirkende Astasierungsbeiträge unterschiedlicher Astasierungsmittel zu einer Gesamt-Astasierung der effektiven Systemsteifigkeit.

Aus der US 3 734 218 A ist eine Wägevorrichtung bekannt, bei der der Lastaufnehmer unmittelbar, d. h. ohne einen Übersetzungshebel mit der Tauchspulenanordnung wechselwirkt. Der Lastaufnehmer ist auch nicht über eine Parallellenkeranordnung an der Basis angelenkt. Vielmehr sind zwei übereinander liegende und mit Gegengewichten versehene Stäbe vorgesehen, die um zueinander windschiefe Achsen schwenkbar und im Bereich des Lastaufnehmers über flexible Koppelbänder einerseits miteinander und andererseits mit dem Lastaufnehmer verbunden sind.

### Aufgabenstellung

Es ist die Aufgabe der vorliegenden Erfindung, eine gattungsgemäße Wägevorrichtung derart weiterzubilden, dass die effektive Systemsteifigkeit auf einfache Weise und über weitere Bereiche einstellbar ist.

### Darlegung der Erfindung

Diese Aufgabe wird in Verbindung mit den Merkmalen des Oberbegriffs von Anspruch 1 dadurch gelöst, dass weiter ein um ein basisfestes zweites Hebelgelenk schwenkbar gelagerter, zweiter Übertragungshebel mit einem am Lastaufnehmer angelenkten, zweiten lastaufnehmerseitigen Hebelarm und einem zweiten lastaufnehmerfernen Hebelarm umfasst ist, wobei der zweite Übertragungshebel mit zweiten Astasierungsmitteln versehen ist, die einen zweiten Astasierungsbeitrag zur effektiven Systemsteifigkeit in einer der ersten Astasierungsrichtung entgegengesetzten, zweiten Astasierungsrichtung bewirken, und wobei weiter Kraftflussverteilungsmittel zur variierbaren Verteilung einer auf den Lastaufnehmer wirkenden Kraft auf die beiden Übertragungshebel umfasst sind.

Bevorzugte Ausführungsformen der Erfindung sind Gegenstand der abhängigen Ansprüche.

Der Kerngedanke der Erfindung liegt darin, den Kraftfluss, der bei bekannten Wägevorrichtungen vollständig und ausschließlich von der Last über den ersten Übertragungshebel zum Sensor geleitet wird, in mehrere Kraftflusspfade aufzuspalten, wobei jeder Kraftflusspfad einen anders, insbesondere entgegengesetzt astasierten Übertragungshebel passiert, alle Übertragungshebel und insbesondere ihre Gelenke tragen naturgemäß zur effektiven Systemsteifigkeit bei. Aufgrund der unterschiedlichen, insbesondere einander entgegengesetzten Astasierung unterscheiden sich jedoch ihre Astasierungsbeiträge. Insbesondere kann einer der Übertragungshebel in einer positiven, d. h. stabilisierenden Astasierungsrichtung "vor"-astasiert sein, wohingegen ein anderer Übertragungshebel in negative, d. h. labilisierender Astasierungsrichtung "vor"-astasiert ist. Die Astasierungsbeiträge der einzelnen Kraftflusspfade zur Gesamtastasierung sind mit dem über sie verlaufenden Anteil der Gesamtkraft, gewichtet. Wird etwa die Gesamtkraft, d. h. das Gewicht der aufgelegten Last, ausschließlich über den ersten Übertragungshebel zum Sensor geleitet, arbeitet die erfindungsgemäße Wägevorrichtung wie eine herkömmliche Wägevorrichtung, wobei sich ihre effektive Systemsteifigkeit allein aus den Steifigkeiten der zum ersten Übertragungshebel gehörigen Systemkomponenten sowie den am ersten Übertragungshebel ansetzenden Astasierungsmaßnahmen zusammensetzt. Wird jedoch ein Anteil der Gesamtkraft auf den zusätzlichen, zweiten Übertragungshebel verlagert, tragen die ihm zuzuordnenden Steifigkeiten und Astasierungsmaßnahmen in eben diesem Ausmaß zur effektiven Systemsteifigkeit bei. Durch eine Variation der Kraftflussverteilung auf unterschiedliche Kraftflusspfade mit unterschiedlicher Vorastasierung kann also die Gesamtastasierung und damit die effektive Systemsteifigkeit variiert werden, ohne dass dazu gesonderte Astasierungsmaßnahmen ergriffen bzw. vorhandene Astasierungsmittel variiert werden müssten. Es müssen lediglich die erfindungsgemäß vorgesehenen Kraftflussverteilungsmittel variiert und die resultierende Kraftflussverteilung bei der Auswertung der Sensorsignale berücksichtigt werden.

Die spezielle Ausgestaltung der Kraftflussverteilungsmittel kann unterschiedlich ausfallen und soll weiter unten für verschiedene Ausführungsformen näher erläutert werden.

Die unterschiedliche Vorastasierung der unterschiedlichen Kraftflusspfade, insbesondere der unterschiedlichen Übertragungshebel kann ebenfalls auf verschiedene Weise realisiert sein. Besonders bevorzugt ist vorgesehen, dass die für die genannte Vorastasierung verantwortlichen ersten und zweiten Astasierungsmittel dadurch realisiert sind, dass der Kraftangriffspunkt des einen der Übertragungshebel unterhalb und der Kraftangriffspunkt eines anderen der Übertragungshebel oberhalb des jeweils zugeordneten Hebelgelenks liegt. Insbesondere kann vorgesehen sein, dass die beiden Hebelarme eines der Übertragungshebel in einem nach vertikal unten offenen Winkel und die Hebelarme eines anderen Übertragungshebels in einem nach vertikal oben offenen Winkel zueinander stehen. Wie eingangs erläutert, führt dies zu einer stabilisierenden Astasierung beim erstgenannten Übertragungshebel und zu einer labilisierenden Astasierung beim zweitgenannten Übertragungshebel. Ersterer trägt also, sofern wenigstens ein Teil des Kraftflusses über ihn läuft, stabilisierend zur effektiven Systemsteifigkeit bei, während letzterer, sofern wenigstens ein Anteil der Gesamtkraft (auch) über ihn verläuft, labilisierend zur effektiven Systemsteifigkeit beiträgt. Diese Art der Vorastasierung erscheint besonders günstig, weil sie durch starre und langfristig unveränderbare Astasierungsmittel zustande kommt, bei denen keine Gefahr einer Dejustage oder sonstiger Art einer Veränderung der Wirkung mit der Zeit besteht.

Als eine Möglichkeit zur Variation der Kraftflussverteilung kann vorgesehen sein, dass die Kraftflussverteilungsmittel durch je ein horizontal verschiebbares Trimmgewicht auf den Übertragungshebeln realisiert sind, wobei die Trimmgewichte zur Variation der Kraftflussverteilung in gleichem effektiven Ausmaß in einander entgegengesetzten Effektivrichtungen verschiebbar sind. Beispielsweise können die Trimmgewichte am laustaufnehmerfernen Hebelarm angeordnet sein. Sie erzeugen damit an jedem Übertragungshebel ein Drehmoment, welches demjenigen Drehmoment entgegengerichtet ist, das vom Gewicht der aufgelegten Last erzeugt wird. Bei gleich langen Übertragungshebeln und Hebelarmen und identischen Trimmgewichten, die an identischer Position auf dem jeweils zugeordneten Übertragungshebel angeordnet sind, führt eine einander entgegengesetzte Horizontalverschiebung dieser Trimmgewichte um identische Verschiebewege ohne jede Änderung der Gleichgewichtslage des Gesamtsystems zu einer Variation der auf die einzelnen Kraftflusspfade geleiteten Anteile des Lastgewichts. Bei unterschiedlich langen Hebelarmen, unterschiedlichen Trimmgewichten und/oder unterschiedlichen Positionen der Trimmgewichte auf dem jeweils zugeordneten Hebelarm müssen, wie der Fachmann leicht erkennt, die zur Erzielung desselben Effektes erforderlichen Verschiebewege entsprechend abgewandelt werden, wobei im Wesentlichen lineare Abhängigkeiten zu berücksichtigen sind. Analoges gilt auch im Fall, dass die Trimmgewichte an dem lastaufnehmerseitigen Hebelarmen angeordnet sind, oder in Fällen, in denen sie an in Bezug auf den Lastaufnehmer unterschiedlichen Hebelarmen angeordnet sind. In diesem Sinne sind die oben verwendeten Begriffe eines "effektiven Ausmaßes" und "Effektivrichtungen" zu verstehen.

Grundsätzlich ist es hinreichend. wenn einer der Übertragungshebel, nämlich der erste Übertragungshebel, mit einem Sensor gekoppelt ist. Der zweite Übertragungshebel kann "blind" enden. Es ist nicht zwingend erforderlich, dass der über ihn geleitete Kraftanteil explizit gemessen wird. Es genügt, wenn aus der Einstellung der Kraftflussverteilungsmittel bekannt ist, welcher Anteil an der Gesamtkraft auf ihn geleitet wird. Aus der Messung des über den ersten Übertragungshebel geleiteten Kraftanteils kann dann die Gesamtkraft durch einfache Multiplikation mit einem entsprechenden Korrekturfaktor berechnet werden.

Allerdings kann bei einer alternativen Ausführungsform vorgesehen sein, dass beide (und gegebenenfalls auch weitere) Hebelarme eigene Tauchspulenanordnungen aufweisen. So kann bei einer solchen Ausgestaltung vorgesehen sein, dass der zweite laustaufnehmerferne Hebelarm mit einer eine zweite Tauchspulenanordnung aufweisenden, zweiten Sensor gekoppelt ist, wobei die zweite Tauchspulenanordnung zwei in vertikaler Richtung relativ zueinander bewegbare Sensorelemente, nämlich einen zweiten Magneten und eine in das Magnetfeld des zweiten Magneten eingetauchte, zweite Spule, umfasst und an dem zweiten lastaufnehmerfernen Hebelarm angreift, in dem eines ihrer Sensorelemente starr mit dem zweiten lastaufnehmerfernen Hebelarm und das andere starr mit der Basis verbunden ist (wie weiter unten erläutert, ist es dabei jedoch nicht zwingend erforderlich, dass der zweite Sensor auch tatsächlich sensorisch genutzt wird).

Dies entspricht einer elektrischen Ausgestaltung der Kraftflussverteilungsmittel. Jede der Tauchspulenanordnungen trägt zur Kompensation des Lastgewichts bei. Die vektorielle Summe ihrer Spulenströme entspricht dem für das Lastgewicht repräsentativen Messstrom. Durch Variation der Stromanteile in den einzelnen Spulen kann der über den jeweiligen Kraftflusspfad geleitete Anteil an der Gesamtkraft eingestellt werden.

Die Tauchspulenanordnungen können dabei in gleicher vertikaler Richtung am jeweils zugeordneten lastaufnehmerfernen Hebelarm angreifen. Bei dieser Ausführungsform werden also die über die verschiedenen Kraftflusspfade fließenden Kraftanteile jeweils einzeln gemessen. Die Gesamtkraft kann dann durch Addition der einzelnen gemessenen Anteile bestimmt werden. Der so ermittelte Wert sollte sich mit demjenigen Wert decken, der aus jeder der einzelnen Messungen unter Verwendung des oben erläuterten, die eingestellte Kraftflussverteilung repräsentierenden Korrekturfaktors ergibt. Die derartige Mehrfachberechnung der Gesamtmasse erlaubt eine zuverlässige Kontrolle der Geräteeinstellungen. Eine derartige, sensorische Nutzung des zweiten Sensors ist allerdings nicht erforderlich; es genügt, die Stromverteilung in den Spulen zu kennen und lediglich die den Spulenstrom im ersten Sensor zur Berechnung des Gewichtes der aufgelegten Last zu verwenden, d. h. nur den ersten Sensor auch tatsächlich sensorisch zu nutzen, während der zweite Sensor nur als Element der Kraftflussverteilungsmittel wirkt.

Bei der oben erläuterten Zwei-Sensor-Konstellation ist es möglich, dass die Tauchspulenanordnungen in unterschiedlichen vertikalen Richtungen am jeweils zugeordneten lastaufnehmerfernen Hebelarm angreifen. Diese Variante spielt insbesondere dann eine Rolle, wenn beide Tauchspulenanordnungen in einander entgegengesetzten Richtungen vertikal vom jeweils zugeordneten lastaufnehmerfernen Hebelarm beabstandet angeordnet sind.

Einer solchen Gestaltung liegt die Erkenntnis zugrunde, dass die Wirkung einer mechanischen Astasierung durch vertikale Trimmgewichte am Angriffspunkt des Gelenks auch auf elektrischem Wege erreicht werden kann, nämlich durch eine Tauchspulenanordnung, die an irgendeiner Axialposition des Übertragungshebels ansetzt, selbst aber vertikal beabstandet vom Hebelarm positioniert ist. Die rein mechanische Gewichtskraft des vertikalen Trimmgewichts kann also durch die elektromagnetisch erzeugte Kraft der Tauchspulenanordnung ersetzt werden. Üblicherweise wird beim Aufbau des Wägesensors mit vergleichsweise großem Aufwand versucht, das Zentrum der Wechselwirkung zwischen den Magnetfeldern der Spule und des Magneten exakt in die horizontale Zentralebene des (in Gleichgewichtslage befindlichen) sensorseitigen Hebelarms zu legen. Im Gegensatz dazu ist bei der hier beschriebenen Ausführungsform nun die bewusste Einhaltung eines vertikalen Abstandes zwischen diesem Wechselwirkungszentrum und der horizontalen Zentralebene des sensorseitigen Hebelarms vorgesehen. Dies ist mit der vereinfachenden Formulierung einer vom Hebelarm "beabstandeten" Tauchspulenanordnung gemeint. Insbesondere hat eine vertikal vom sensorseitigen Hebelarm beabstandete Tauchspulenanordnung, die eine vom Hebelarm weg gerichtete Krafteinwirkung auf diesen ausübt, eine stabilisierende, d. h. eine die effektive Systemsteifigkeit steigernde Wirkung, wohingegen eine solche Tauchspulenanordnung, die eine in Richtung auf den Hebelarm zu gerichtete Krafteinwirkung auf diesen ausübt, eine labilisierende, d. h. eine die effektive Systemsteifigkeit verringernde Wirkung hat. Der besondere Vorteil einer solchen elektrischen Astasierung liegt in deren leichterer Einstellbarkeit. In Umsetzung dieser Erkenntnis sieht die beschriebene Ausführungsform bevorzugt vor, zwei, vorzugsweise grundsätzlich baugleiche Tauchspulenanordnungen vorzusehen, von denen die eine oberhalb und die andere unterhalb des jeweils zugeordneten lastaufnehmerfernen Hebelarms angeordnet ist und die somit in entgegengesetzten Richtungen am jeweiligen Hebelarm angreifen. Bei Betrieb werden beide Tauchspulenanordnungen bestromt, sodass sich ihrer beide Krafteinwirkungen auf den jeweiligen Hebelarm vektoriell zur Gesamt-Kompensationskraft addieren. Allerdings führt bei gleicher resultierender Gesamt-Kompensationskraft die Verteilung der einzelnen Teilkräfte auf die beiden Tauchspulenanordnungen und insbesondere die Verteilung der Bestromung der beiden Spulen nicht nur zu einer unterschiedlichen Kraftflussverteilung, sondern auch zu unterschiedlichen Astasierungswirkungen, sodass insgesamt eine gewünschte (vorbestimmte) effektive Systemsteifigkeit präzise eingestellt werden kann.

Hierzu gibt es verschiedene Ansätze zum Betrieb einer erfindungsgemäßen Wägevorrichtung. Gemeinsam ist ihnen, dass sie jeweils ein Verfahren darstellen, welches die folgenden Schritte umfasst:
- Auflegen einer Last auf den Lastaufnehmer,
- Bestromen der Tauchspulenanordnungen mit einem Kompensationsstrom derart, dass eine durch die Last hervorgerufene Auslenkung der Übertragungshebel elektromagnetisch kompensiert wird,
- Berechnen der Masse der Last aus der Stärke des Kompensationsstroms,
wobei eine vorbestimmte effektive Systemsteifigkeit durch eine entsprechende Verteilung des Kompensationsstroms auf die beiden Tauchspulenanordnungen eingestellt wird.

Obwohl nicht zwingend erforderlich, können alle vorgenannten Zwei-Sensor-Varianten der Erfindung an ihren Übertragungshebeln optional mit horizontal verschiebbaren Trimmgewichten versehen sein. Diese können insbesondere bedarfsweise zur zusätzlichen Vorastasierung und/oder zur zusätzlichen Kraftflussverteilung genutzt werden.

Alle vorgenannten Varianten lassen sich in unterschiedlichen mechanischen Ausführungsformen realisieren. Wie aus dem Stand der Technik allgemein bekannt, ist auch bei der vorliegenden Erfindung bevorzugt vorgesehen, dass der Lastaufnehmer mittels einer Parallellenkeranordnung mit zwei parallelen Lenkern an der Basis angelenkt ist. Die Übertragungshebel können sich dabei vertikal zwischen den Lenkern erstrecken. Möglich ist jedoch auch eine Ausführungsform, bei der sich die Übertragungshebel vertikal außerhalb der Lenker erstrecken. Ebenso sind Ausführungsformen denkbar, bei denen sich zumindest einer der Übertragungshebel vertikal zwischen den Lenkern und ein anderer vertikal außerhalb der Lenker erstreckt. Die Auswahl zwischen solchen Varianten wird typischerweise in Ansehung der Bauraumgegebenheiten im Einzelfall erfolgen.

Auch hinsichtlich der relativen Lage der Übertragungshebel zum Lastaufnehmer können unterschiedliche Varianten realisiert werden. Beispielsweise kann vorgesehen sein, dass sich die Übertragungshebel auf derselben (lateralen) Seite des Lastaufnehmers erstrecken, wohingegen es ebenso möglich ist, dass sich die Übertragungshebel auf unterschiedlichen (lateralen) Seiten des Lastaufnehmers erstrecken. Auch hier werden insbesondere die Bauraumerfordernisse des Einzelfalls für die Entscheidung ausschlaggebend sein.

Allgemein kann davon ausgegangen werden, dass der erste Übertragungshebel in einer ersten vertikalen Ebene schwenkbar gelagert und der zweite Übertragungshebel ist in einer zweiten vertikalen Ebene schwenkbar gelagert (der Fachmann wird verstehen, dass hier dabei die vertikale Zentralebene des jeweiligen Übertragungshebels gemeint ist). Bei in unterschiedlichen vertikalen Höhen angeordneten Übertragungshebeln ist bevorzugt vorgesehen, dass die Zentralebenen beider Hebel, d. h. besagte erste und besagte zweite vertikale Ebene, identisch sind. Dies ist aus Symmetriegründen günstig. Allerdings ist es auch möglich, dass besagte Ebenen verschieden sind. Eine solche Ausführungsform erlaubt es, die Übertragungshebel auf der gleichen vertikalen Höhe, d. h. nebeneinander anzuordnen, was die Höhe der Gesamt-Wägevorrichtung deutlich reduzieren kann.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine erste Ausführungsform einer erfindungsgemäßen Wägevorrichtung,
- Figur 2:: eine zweite Ausführungsform einer erfindungsgemäßen Wägevorrichtung,
- Figur 3:: eine dritte Ausführungsform einer erfindungsgemäßen Wägevorrichtung,
- Figur 4:: eine erste mechanische Variante der Ausführungsform von Figur 1,
- Figur 5:: eine zweite mechanische Variante der Ausführungsform von Figur 2,
- Figur 6:: eine dritte mechanische Variante der Ausführungsform von Figur 3 sowie
- Figur 7:: eine vierte Ausführungsform einer erfindungsgemäßen Wägevorrichtung.

### Beschreibung bevorzugter Ausführungsformen

Gleiche Bezugszeichen in den Figuren deuten auf gleiche oder analoge Elemente hin.

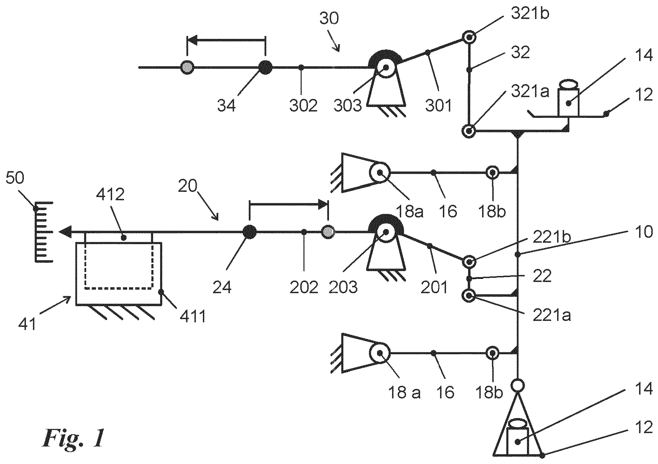

Figur 1 zeigt in stark schematisierter Darstellung eine erste Ausführungsform einer erfindungsgemäßen Wägevorrichtung. Diese umfasst einen Lastaufnehmer 10, der mit einem Wägegutträger 12 versehen ist, auf welchen eine Last 14 aufgelegt ist. Bei der dargestellten Ausführungsform sind zwei Formen von Wägegutträgern 12 illustriert, nämlich eine oben am Lastaufnehmer 10 fixierte, stehende Waagschale und eine unten am Lastaufnehmer 10 angelenkte, hängende Waagschale. Der Lastaufnehmer 10 ist über eine Parallellenkeranordnung aus zwei parallelen Lenkern 16 an einer nicht näher dargestellten Basis über Lenkergelenke 18a, 18b angelenkt. Durch diese Parallellenkeranordnung ist der Lastaufnehmer 10 (zumindest bei kleinen Auslenkungen) auf eine rein vertikale Bewegung eingeschränkt. Weiter sind am Lastaufnehmer 10 zwei Übertragungshebel angelenkt, nämlich ein erster Übertragungshebel 20 und ein zweiter Übertragungshebel 30. Jeder der Übertragungshebel 20, 30 weist einen lastaufnehmerseitigen Hebelarm 201, 301 und einen lastaufnehmerfernen Hebelarm 202, 302 auf. Im Verbindungsbereich der Hebelarme 201, 202 bzw. 301, 302 sind die Hebelarme 20, 30 jeweils über ein zugeordnetes, erstes bzw. zweites Hebelgelenk 203, 303 schwenkbeweglich an der Basis angelenkt.

Die Anlenkung der Übertragungshebel 20, 30 am Lastaufnehmer 10 erfolgt mittelbar über ein jeweils zugeordnetes Koppelband 22, 32, welches in der Praxis als ein steifer Steg ausgebildet ist, der jeweils über ein unteres Koppelgelenk 221a, 321a und ein oberes Koppelgelenk 221b, 321b einerseits am Lastaufnehmer 10 und andererseits am lastaufnehmerseitigen Hebelarm, 201, 301 des jeweils zugeordneten Übertragungshebels 20, 30 angelenkt ist.

Außerdem ist bei der dargestellten Ausführungsform auf jedem der lastaufnehmerfernen Hebelarme 202, 302 ein horizontal verschiebliches Trimmgewicht 24, 34 angeordnet. Die Trimmgewichte 24, 34 sind insbesondere in gleichem effektiven Ausmaß in einander entgegengesetzten Effektivrichtungen verschiebbar, was beispielsweise durch miteinander gekoppelte Präzisionsmotoren realisiert sein kann. Zur Bedeutung der Begriffe "effektives Ausmaß" und "Effektivrichtung" wird auf die entsprechende Erläuterung im allgemeinen Teil der Beschreibung verwiesen.

Weiter umfasst die Wägevorrichtung von Figur 1 eine erste Tauchspulenanordnung 41, umfassend einen an der Basis fixierten, topfartigen ersten Magneten 411, der vorzugsweise als Permanentmagnet ausgebildet ist, und eine in dessen Magnetfeld eingetauchte erste Spule 412, die am ersten Übertragungshebel 20, insbesondere an dessen lastaufnehmerfernen Hebelarm 202 fixiert ist. Die Auslenkung des ersten Übertragungshebels 20 ist mittels eines optischen Lagedetektors 50 messbar. In Figur 1 nicht dargestellt ist ein Regelkreis zur geregelten Bestromung der ersten Tauchspulenanordnung 41, deren Funktionsprinzip demjenigen herkömmlicher EMK-Waagen entspricht und dem Fachmann grundsätzlich bekannt ist.

Bei der dargestellten Ausführungsform unterscheiden sich die Übertragungshebel 20, 30 insbesondere in der Lage der Kraftangriffspunkte, die beim dachartig gestalteten, ersten Übertragungshebel 20 unterhalb des Drehpunktes des ersten Hebelgelenks 203 und beim wannenartig gestalteten, zweiten Übertragungshebel 30 oberhalb des zweiten Hebelgelenks 303 liegen. Der erste Übertragungshebel 20 ist somit stabilisierend vorastasiert, wohingegen der zweite Übertragungshebel 30 labilisierend vorastasiert ist. Durch einander kompensierende Verschiebung der Trimmgewichte 24, 34 (wie durch die Pfeile in Figur 1 angedeutet), lassen sich die Anteile der von der Last 14 eingebrachten Gesamtkraft gezielt auf die beiden Übertragungshebel 20, 30 verteilen. Entsprechend tragen die zugeordneten Vorastasierungen zur effektiven Systemsteifigkeit bei, die auf diese Weise variierbar ist, ohne dass die von der ersten Tauchspulenanordnung 41 nominell aufzubringende Kompensationskraft verändert würde.

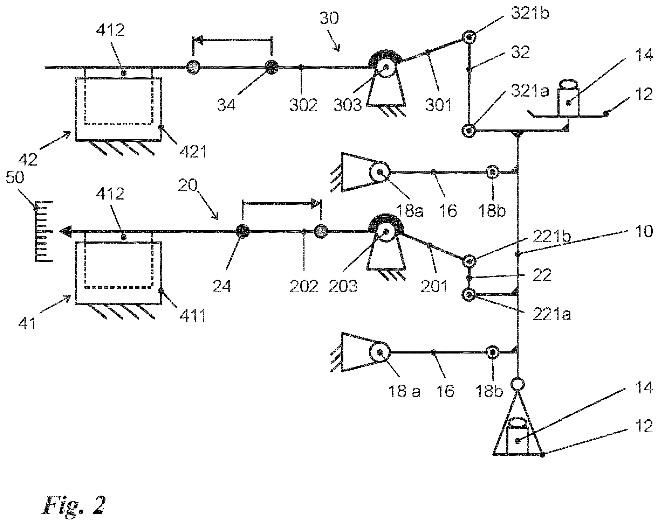

Die Ausführungsform von Figur 2 unterscheidet sich von derjenigen der Figur 1 durch eine zweite Tauchspulenanordnung 42, die am zweiten Übertragungshebel 30, insbesondere an dessen lastaufnehmerfernen Hebelarm 302 angeordnet ist. Bei dieser Ausführungsform sind die Trimmgewichte 24, 34 rein optionaler Natur. Die Verteilung der Kraftflussanteile auf die beiden Übertragungshebel 20, 30 erfolgt allein elektrisch durch die Aufteilung des zur Kompensation des Lastgewichts erforderlichen Stroms durch die Spulen 412, 422 in den Magnetfeldern der zugeordneten Magneten 411, 421.

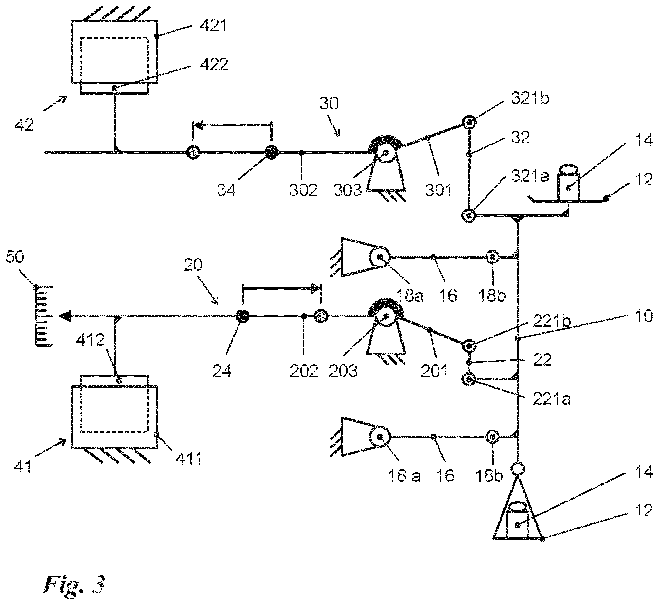

Bei der Ausführungsform von Figur 3 sind die beiden Spulenanordnungen 41, 42 in einander entgegengesetzter vertikaler Richtung vom jeweils zugeordneten Hebelarm 20, 30 beabstandet positioniert. Dies führt, wie im allgemeinen Teil der Beschreibung ausführlich erläutert, neben der Kraftflussaufteilung zusätzlich zu einer elektrischen Astasierung, die für die beiden Kraftflusspfade unterschiedlich ist.

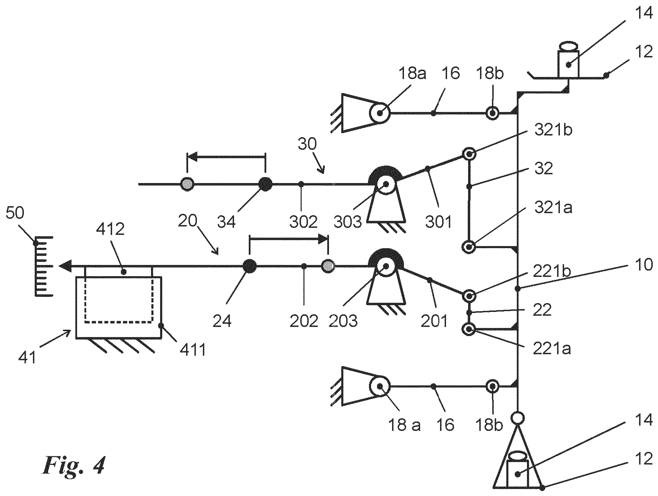

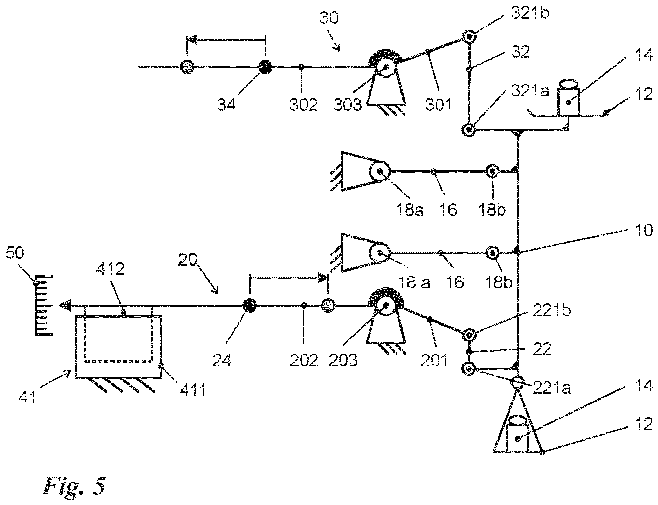

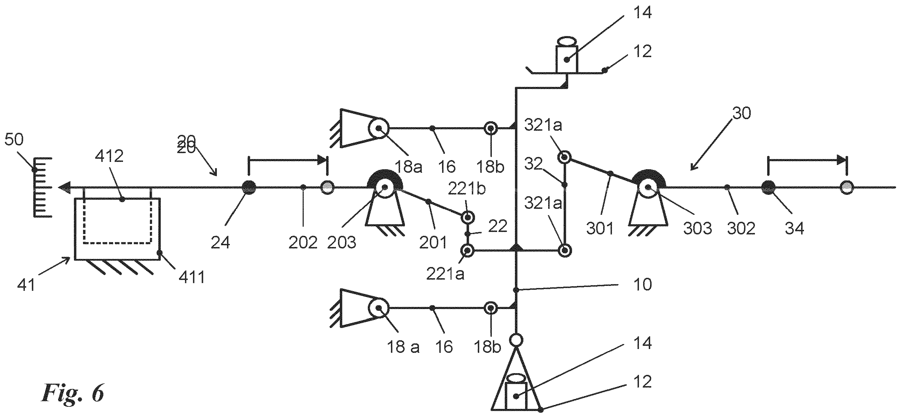

Die Figuren 4 bis 6 zeigen verschiedene mechanisch-konstruktive Varianten der Ausführungsform von Figur 1, die allerdings ohne weiteres auch auf sämtliche anderen Ausführungsformen übertragbar sind. Figur 4 zeigt eine Variante, bei der beide Übertragungshebel 20, 30 vertikal zwischen den Lenker 16 angeordnet sind. Im Gegensatz dazu zeigt Figur 5 eine Variante, bei der beide Übertragungshebel 20, 30 vertikal außerhalb der Lenker 16 angeordnet sind. Gemeinsam ist alles drei Varianten von Figur 1, Figur 4 und Figur 5, dass beide Übertragungshebel 20, 30 auf derselben (lateralen) Seite des Lastaufnehmers 10 (nämlich links von ihm) angeordnet sind. Im Gegensatz dazu zeigt Figur 6 eine Variante, bei der die Übertragungshebel 20, 30 auf unterschiedlichen (lateralen) Seiten des Lastaufnehmers 10 angeordnet sind.

In den Figuren nicht explizit dargestellt ist das räumliche Verhältnis der Übertragungshebel 20, 30 in Bezug auf ihre Lage parallel zur Zeichnungsebene. Sie können diesbezüglich in derselben vertikalen Ebene angeordnet sein. Alternativ können sie jedoch auch in unterschiedlichen vertikalen Ebenen, insbesondere nebeneinander auf gleicher vertikaler Höhe und auf derselben lateralen Seite des Lastaufnehmers 20 angeordnet sein.

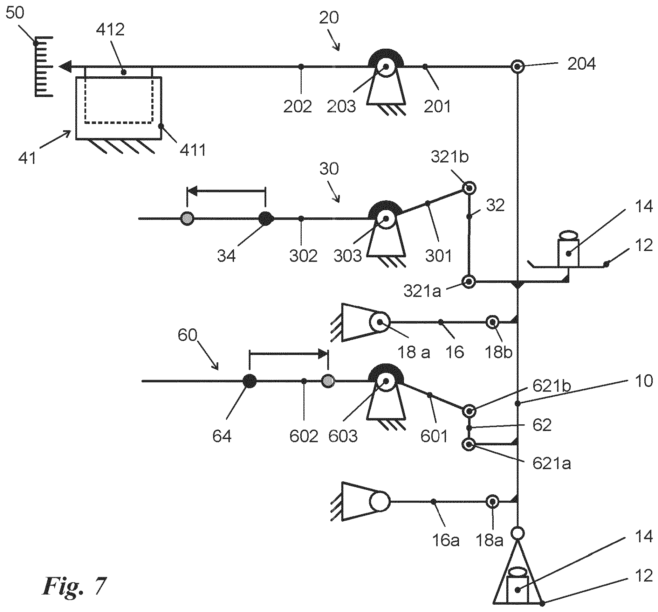

Figur 7 schließlich zeigt eine Erweiterung der Ausführungsform von Figur 1, bei der die beiden Aufgaben des dortigen ersten Übertragungshebels 20, nämlich einerseits als Träger der stabilisierenden Vorastasierung und andererseits als Träger der Tauchspulenanordnung 41, auf zwei Übertragungshebel 20, 60 aufgespalten ist. Der in Figur 7 die Tauchspulenanordnung 41 tragende, erste Übertragungshebel 20 ist lediglich über ein einfaches Koppelgelenk 204 am Lastaufnehmer 10 angelenkt. Er ist mechanisch so konstruiert, dass er hinsichtlich seines Astasierungsbeitrags möglichst neutral ist. Die Aufgabe der stabilisierenden Vorastasierung wird hingegen einem zusätzlichen, dritten Übertragungshebel 60 mit einem lastaufnehmerseitigen Hebelarm 601 und einem lastaufnehmerfernen Hebelarm 602, der um ein drittes Hebelgelenk 603 schwenkbar gelagert ist, zugewiesen. Dieser dritte Übertragungshebel 60 ist bei der gezeigten Ausführungsform über ein Koppelband 62 und entsprechende Koppelgelenke 621a, b am Lastaufnehmer 10 angelenkt. Bei der dargestellten Ausführungsform ist der dritte Übertragungshebel 60 auch Träger eines horizontal verschieblichen Trimmgewichtes 64.

### Bezugszeichenliste

- 10: Lastaufnehmer
- 12: Wägegutträger
- 14: Last
- 16: Lenker
- 18a, b: Lenkergelenk
- 20: erster Übertragungshebel
- 201: lastträgerseitiger Hebelarm von 20
- 202: lastaufnehmerferner Hebelarm von 20
- 203: erstes Hebelgelenk
- 22: Koppelband
- 221a, b: Koppelgelenk
- 24: Trimmgewicht
- 30: zweiter Übertragungshebel
- 301: lastträgerseitiger Hebelarm von 30
- 302: lastaufnehmerferner Hebelarm von 30
- 303: zweites Hebelgelenk
- 32: Koppelband
- 321a, b: Koppelgelenk
- 34: Trimmgewicht
- 41: erste Tauchspulenanordnung
- 411: erster Magnet
- 412: erste Spule
- 42: zweite Tauchspulenanordnung
- 421: zweiter Magnet
- 422: zweite Spule
- 50: Lagedetektor
- 60: dritter Übertragungshebel
- 601: lastträgerseitiger Hebelarm von 60
- 602: lastaufnehmerferner Hebelarm von 60
- 603: drittes Hebelgelenk
- 62: Koppelband
- 621a, b: Koppelgelenk
- 64: Trimmgewicht

## Patentansprüche

1. Wägevorrichtung, umfassend
- einen gegenüber einer Basis vertikal auslenkbaren Lastaufnehmer (10),
- einen um ein basisfestes erstes Hebelgelenk (203) schwenkbar gelagerten ersten Übertragungshebel (20) mit einem am Lastaufnehmer (10) angelenkten, ersten lastaufnehmerseitigen Hebelarm (201) und einem mit einem ersten Sensor gekoppelten, ersten lastaufnehmerfernen Hebelarm (202),
- den eine erste Tauchspulenanordnung (41) aufweisenden ersten Sensor, wobei die erste Tauchspulenanordnung (41) zwei in vertikaler Richtung relativ zueinander bewegbare erste Sensorelemente, nämlich einen ersten Magneten (411) und eine in das Magnetfeld des ersten Magneten (411) eingetauchte, erste Spule (412), umfasst und an dem ersten lastaufnehmerfernen Hebelarm (202) angreift, indem eines ihrer Sensorelemente starr mit dem ersten lastaufnehmerfernen Hebelarm (262a) und das andere starr mit der Basis verbunden ist,
wobei der erste Übertragungshebel (20) mit ersten Astasierungsmitteln versehen ist, die einen Astasierungsbeitrag zur effektiven Systemsteifigkeit in einer ersten Astasierungsrichtung bewirken,
**dadurch gekennzeichnet,**
**dass** weiter ein um ein basisfestes zweites Hebelgelenk (303) schwenkbar gelagerter, zweiter Übertragungshebel (30) mit einem am Lastaufnehmer (10) angelenkten, zweiten lastaufnehmerseitigen Hebelarm (301) und einem zweiten lastaufnehmerfernen Hebelarm (302) umfasst ist,
wobei der zweite Übertragungshebel (30) mit zweiten Astasierungsmitteln versehen ist, die einen zweiten Astasierungsbeitrag zur effektiven Systemsteifigkeit in einer der ersten Astasierungsrichtung entgegengesetzten, zweiten Astasierungsrichtung bewirken,
und wobei weiter Kraftflussverteilungsmittel zur variierbaren Verteilung einer auf den Lastaufnehmer (10) wirkenden Kraft auf die beiden Übertragungshebel (20, 30) umfasst sind.

2. Wägevorrichtung nach Anspruch 1,
**dadurch gekennzeichnet,**
**dass** die ersten und zweiten Astasierungsmittel dadurch realisiert sind, dass der Kraftangriffspunkt des einen der Übertragungsbebel (20, 30) unterhalb und der Kraftangriffspunkt eines anderen der Übertragungsbebel (30, 20) oberhalb des jeweils zugeordneten Hebelgelenks (203, 303) liegt.

3. Wägevorrichtung nach einem der vorangehenden Ansprüche,
**dadurch gekennzeichnet,**
**dass** die Kraftflussverteilungsmittel durch je ein horizontal verschiebbares Trimmgewicht (24, 34) auf den Übertragungshebeln (20, 30; 60) realisiert sind, wobei die Trimmgewichte (24, 34; 64) zur Variation der Kraftflussverteilung in gleichem effektiven Ausmaß in einander entgegengesetzten Effektivrichtungen verschiebbar sind.

4. Wägevorrichtung nach einem der Ansprüche 1 bis 2,
**dadurch gekennzeichnet,**
**dass** der zweite lastaufnehmerferne Hebelarm (302) mit einem eine zweite Tauchspulenanordnung (42) aufweisenden, zweiten Sensor gekoppelt ist, wobei die zweite Tauchspulenanordnung (42) zwei in vertikaler Richtung relativ zueinander bewegbare zweite Sensorelemente, nämlich einen zweiten Magneten (421) und eine in das Magnetfeld des zweiten Magneten (421) eingetauchte, zweite Spule (422), umfasst und an dem zweiten lastaufnehmerfernen Hebelarm (302) angreift, indem eines ihrer Sensorelemente starr mit dem zweiten lastaufnehmerfernen Hebelarm (302) und das andere starr mit der Basis verbunden ist.

5. Wägevorrichtung nach Anspruch 4,
**dadurch gekennzeichnet,**
**dass** die Tauchspulenanordnungen (41, 42) in gleicher vertikaler Richtung am jeweils zugeordneten lastaufnehmerfernen Hebelarm (202, 302) angreifen.

6. Wägevorrichtung nach Anspruch 4,
**dadurch gekennzeichnet,**
**dass** die Tauchspulenanordnungen (41, 42) in unterschiedlichen vertikalen Richtungen am jeweils zugeordneten lastaufnehmerfernen Hebelarm (202, 302) angreifen.

7. Wägevorrichtung nach Anspruch 6,
**dadurch gekennzeichnet,**
**dass** beide Tauchspulenanordnungen (41, 42) in einander entgegengesetzten Richtungen vertikal vom jeweils zugeordneten lastaufnehmerfernen Hebelarm (202, 302) beabstandet angeordnet sind.

8. Wägevorrichtung nach einem der Ansprüche 4 bis 7,
**dadurch gekennzeichnet,**
**dass** die Übertragungshebel (20, 30) jeweils mit einem horizontal verschiebbaren Trimmgewicht (24, 34) versehen sind.

9. Wägevorrichtung nach einem der vorangehenden Ansprüche,
**dadurch gekennzeichnet,**
**dass** der Lastaufnehmer (10) mittels einer Parallellenkeranordnung mit zwei parallelen Lenkern (16) an der Basis angelenkt ist.

10. Wägevorrichtung nach Anspruch 9,
**dadurch gekennzeichnet,**
**dass** sich die Übertragungshebel (20, 30) vertikal zwischen den Lenkern (16) erstrecken.

11. Wägevorrichtung nach Anspruch 9,
**dadurch gekennzeichnet,**
**dass** sich die Übertragungshebel (20, 30; 60) vertikal außerhalb der Lenker (16) erstrecken.

12. Wägevorrichtung (10) nach einem der vorangehenden Ansprüche,
**dadurch gekennzeichnet,**
**dass** sich die Übertragungshebel (20, 30, 60) auf derselben Seite des Lastaufnehmers (10) erstrecken.

13. Wägevorrichtung (10) nach einem der Ansprüche 1 bis 11,
**dadurch gekennzeichnet,**
**dass** sich die Übertragungshebel (20, 30) auf unterschiedlichen Seiten des Lastaufnehmers (10) erstrecken.

14. Wägevorrichtung (10) nach einem der vorangehenden Ansprüche,
**dadurch gekennzeichnet,**
**dass** die Übertragungshebel (20, 30, 60) in derselben vertikalen Ebene schwenkbar gelagert sind.

15. Wägevorrichtung (10) nach einem der Ansprüche 1 bis 13,
**dadurch gekennzeichnet**,
da dass die Übertragungshebel in unterschiedlichen vertikalen Ebenen schwenkbar gelagert sind.

## Claims

1. Weighing device comprising
- a load receptor (10) which can be deflected vertically relative to a base,
- a first transmission lever (20) pivotably mounted about a first lever joint (203) fixed to the base, with a first close-to-the-load-receptor lever arm (201) articulated to the load receptor (10) and a first far-from-the-load-receptor lever arm (202) coupled to a first sensor,
- the first sensor comprising a first plunger coil arrangement (41), wherein the first plunger coil arrangement (41) comprises two first sensor elements movable relative to one another in the vertical direction, namely a first magnet (411) and a first coil (412) immersed in the magnetic field of the first magnet (411), and engages the first far-from-the-load-receptor lever arm (202), in that one of its sensor elements is rigidly connected to the first far-from-the-load-receptor lever arm (202) and the other is rigidly connected to the base,
wherein the first transmission lever (20) is provided with first astasization means which effect an astasization contribution to the effective system stiffness in a first astasization direction,
**characterised in**
**that** it further comprises a second transmission lever (30) pivotably mounted about a second lever joint (303) fixed to the base, having a second close-to-the-load-receptor lever arm (301) articulated to the load receptor (10) and a second far-from-the-load-receptor lever arm (302),
wherein the second transmission lever (30) is provided with second astasization means which effect a second astasization contribution to the effective system stiffness in a second astasization direction opposite to the first astasization direction, and further **characterized in that** force flow distribution means are comprised for a variable distribution of a force acting on the load receptor (10) to the two transmission levers (20, 30).

2. Weighing device according to claim 1,
**characterised in**
**that** the first and second astasization means are realised in that the force application point of one of the transmission levers (20, 30) lies below and the force application point of another of the transmission levers (30, 20) lies above the respectively associated lever joint (203, 303).

3. Weighing device according to one of the preceding claims,
**characterised in**
**that** the force flow distribution means are each realised by a horizontally displaceable trim weight (24, 34) on the transmission levers (20, 30; 60), the trim weights (24, 34; 64) being displaceable to the same effective extent in opposite effective directions in order to vary the force flow distribution.

4. Weighing device according to one of claims 1 to 2,
**characterised in**
**that** the second far-from-the-load-receptor lever arm (302) is coupled to a second sensor comprising a second plunger coil arrangement (42), wherein the second plunger coil arrangement (42) comprises two second sensor elements movable relative to each other in the vertical direction, namely a second magnet (421) and a second coil (422) immersed in the magnetic field of the second magnet (421), and engages on the second far-from-the-load-receptor lever arm (302), in that one of its sensor elements is rigidly connected to the second far-from-the-load-receptor lever arm (302) and the other is rigidly connected to the base.

5. Weighing device according to claim 4,
**characterised in**
**that** the plunger coil arrangements (41, 42) engage in the same vertical direction on the respectively associated far-from-the-load-receptor lever arm (202, 302).

6. Weighing device according to claim 4,
**characterised in**
**that** the plunger coil arrangements (41, 42) engage in different vertical directions on the respectively associated far-from-the-load-receptor lever arm (202, 302).

7. Weighing device according to claim 6,
**characterised in**
**that** both plunger coil arrangements (41, 42) are arranged in opposite directions vertically spaced from the respectively associated far-from-the-load-receptor lever arm (202, 302).

8. Weighing device according to one of claims 4 to 7,
**characterised in**
**that** the transmission levers (20, 30) are each provided with a horizontally displaceable trim weight (24, 34).

9. Weighing device according to one of the preceding claims,
**characterised in**
**that** the load receptor (10) is articulated to the base by means of a parallel link arrangement with two parallel links (16).

10. Weighing device according to claim 9,
**characterised in**
**that** the transmission levers (20, 30) extend vertically between the links (16).

11. Weighing device according to claim 9,
**characterised in**
**that** the transmission levers (20, 30; 60) extend vertically outside the link arms (16).

12. Weighing device (10) according to one of the preceding claims,
**characterised in**
**that** the transmission levers (20, 30, 60) extend on the same side of the load receptor (10).

13. Weighing device (10) according to any one of claims 1 to 11,
**characterised in**
**that** the transmission levers (20, 30) extend on different sides of the load receptor (10).

14. Weighing device (10) according to one of the preceding claims,
**characterised in**
**that** the transmission levers (20, 30, 60) are pivotably mounted in the same vertical plane.

15. Weighing device (10) according to any one of claims 1 to 13,
**characterised in**
**that** the transmission levers are pivotably mounted in different vertical planes.

## Revendications

1. Dispositif de pesage, comprenant
- un récepteur de charge (10) pouvant être dévié verticalement par rapport à une base,
- un premier levier de transmission (20) monté pivotant autour d'une première articulation de levier (203) solidaire de la base, avec un premier côté-récepteur-de-charge bras de levier (201), articulé sur le récepteur de charge (10), et un premier éloigné-du-récepteur-de-charge bras de levier (202), couplé à un premier capteur,
- le premier capteur présentant un premier agencement de bobine mobile (41), le premier agencement de bobine mobile (41) comprenant deux premiers éléments de capteur mobiles l'un par rapport à l'autre dans le sens vertical, à savoir un premier aimant (411) et une première bobine mobile (412) immergée dans le champ magnétique du premier aimant (411), et s'engageant avec le premier éloigné-du-récepteur-de-charge bras de levier (202) en reliant rigidement l'un de ses éléments de détection au premier éloigné-du-récepteur-de-charge bras de levier (202) et l'autre rigidement à la base ,
dans lequel le premier levier de transmission (20) est pourvu de premiers moyens d'astasage qui apportent une contribution d'astasage à la rigidité effective du système dans une première direction d'astasage,
**caractérisé en ce**
**qu'**il comprend en outre un deuxième levier de transmission (30) monté pivotant autour d'une deuxième articulation de levier (303) solidaire de la base, avec un deuxième côté-récepteur-de-charge bras de levier (301), articulé sur le récepteur de charge (10), et un deuxième éloigné-du-récepteur-de-charge bras de levier (302), où le deuxième levier de transmission (30) est pourvu de deuxièmes moyens d'astasage qui apportent une deuxième contribution d'astasage à la rigidité effective du système dans une deuxième direction d'astasage opposée à la première direction d'astasage,
et où il y'ont en outre compris des moyens de répartition du flux de force pour répartir de manière variable une force agissant sur le récepteur de charge (10) sur les deux leviers de transmission (20, 30).

2. Dispositif de pesage selon la revendication 1,
**caractérisé en ce**
**que** les premier et deuxième moyens d'astasage sont réalisés **en ce que** le point d'application de la force de l'un des leviers de transmission (20, 30) est situé en dessous et le point d'application de la force d'un autre des leviers de transmission (30, 20) est situé au-dessus de l'articulation de levier (203, 303) respectivement associée.

3. Dispositif de pesage selon l'une des revendications précédentes,
**caractérisé en ce**
**que** les moyens de répartition du flux de force sont réalisés par un poids d'équilibrage (24, 34) déplaçable horizontalement sur chacun des leviers de transmission (20, 30 ; 60), les poids d'équilibrage (24, 34 ; 64) pouvant être déplacés dans des directions effectives opposées l'une à l'autre pour faire varier la répartition du flux de force dans la même mesure effective.

4. Dispositif de pesage selon l'une des revendications 1 à 2,
**caractérisé en ce**
**que** le deuxième éloigné-du-récepteur-de-charge bras de levier (302) est couplé à un deuxième capteur présentant un deuxième agencement de bobine mobile (42), le deuxième ensemble de bobine mobile (42) comprenant deux deuxièmes éléments de capteur mobiles l'un par rapport à l'autre dans la direction verticale, à savoir un deuxième aimant (421) et une deuxième bobine (422) immergée dans le champ magnétique du deuxième aimant (421), et s'engageant avec le deuxième éloigné-du-récepteur-de-charge bras de levier (302) **en ce que** l'un de ses éléments de capteur est relié rigidement au deuxième éloigné-du-récepteur-de-charge bras de levier (302) et l'autre est relié rigidement à la base.

5. Dispositif de pesage selon la revendication 4,
**caractérisé en ce**
**que** les agencements de bobine mobile (41, 42) agissent dans la même direction verticale sur le éloigné-du-récepteur-de-charge bras de levier (202, 302) respectivement associé.

6. Dispositif de pesage selon la revendication 4,
**caractérisé en ce**
**que** les agencements de bobine mobile (41, 42) agissent dans des directions verticales différentes sur le éloigné-du-récepteur-de-charge bras de levier (202, 302) respectivement associé.

7. Dispositif de pesage selon la revendication 6,
**caractérisé en ce**
**que** les deux ensembles de bobine mobile (41, 42) sont disposés dans des directions opposées l'une à l'autre et sont espacés verticalement du éloigné-du-récepteur-de-charge bras de levier (202, 302) respectivement associé.

8. Dispositif de pesage selon l'une des revendications 4 à 7,
**caractérisé en ce**
**que** les leviers de transmission (20, 30) sont chacun pourvus d'un poids d'équilibrage (24, 34) déplaçable horizontalement.

9. Dispositif de pesage selon l'une des revendications précédentes,
**caractérisé en ce**
**que** le récepteur de charge (10) est articulé sur la base au moyen d'un agencement de bras parallèles comprenant deux bras parallèles (16).

10. Dispositif de pesage selon la revendication 9,
**caractérisé en ce**
**que** les leviers de transmission (20, 30) s'étendent verticalement entre les bras parallèles (16).

11. Dispositif de pesage selon la revendication 9,
**caractérisé en ce**
**que** les leviers de transmission (20, 30 ; 60) s'étendent verticalement à l'extérieur des bras parallèles (16).

12. Dispositif de pesage (10) selon l'une des revendications précédentes,
**caractérisé en ce**
**que** les leviers de transmission (20, 30, 60) s'étendent du même côté du récepteur de charge (10).

13. Dispositif de pesage (10) selon l'une des revendications 1 à 11,
**caractérisé en ce**
**que** les leviers de transmission (20, 30) s'étendent sur différents côtés du récepteur de charge (10).

14. Dispositif de pesage (10) selon l'une des revendications précédentes,
**caractérisé en ce**
**que** les leviers de transmission (20, 30, 60) sont montés pivotants dans le même plan vertical.

15. Dispositif de pesage (10) selon l'une des revendications 1 à 13,
**caractérisé en ce**
**que** les leviers de transmission sont montés pivotants dans des plans verticaux différents.
